# EUROPÄISCHE PATENTSCHRIFT

(11) **EP 1 751 229 B1**
(45) Veröffentlichungstag und Bekanntmachung des Hinweises auf die Patenterteilung: **12.12.2012**
(21) Anmeldenummer: 05714716.7
(22) Anmeldetag: 24.03.2005
(51) Int. Cl.: C08L 23/08, C08L 31/04

(54) **VERWENDUNG EINER THERMOPLASTISCHEN FÜLLSTOFFMISCHUNG**
USE OF A THERMOPLASTIC FILLER MIXTURE
UTILISATION D'UN MÉLANGE DE CHARGES THERMOPLASTIQUES

(30) Priorität: 24.03.2004 CH 4932004
(43) Veröffentlichungstag der Anmeldung: 14.02.2007
(73) Patentinhaber: Hirschi, Markus, CH-4462 Rickenbach (CH)
(72) Erfinder: Hirschi, Markus, CH-4462 Rickenbach (CH)
(74) Vertreter: OK pat AG
(86) Internationale Anmeldenummer: PCT/CH2005/000174
(87) Internationale Veröffentlichungsnummer: WO 2005/090465

(56) Entgegenhaltungen:
- EP-A- 1 378 332
- DD-A- 136 504
- US-A- 4 251 548
- US-A- 4 399 153
- US-A- 5 176 751
- US-A1- 2003 021 865

## Beschreibung

Die Erfindung betrifft eine Verwendung einer thermoplastischen Füllstoffmischung.

Es gibt bekannterweise verschiedenste Kleb- und Füllstoffe, die je nach Anwendungsgebiet und Anforderungsprofil zum Einsatz kommen. Polymere, wie zum Beispiel das bekannte Polyurethan, zählen zu den Materialien, die als Ausgangsmaterial für Beschichtungsstoffe, Dichtstoffe, Vergussmassen und Schäume in zahlreichen Anwendungen dienen. Um ein solches Ausgangsmaterial, sei es nun eine Beschichtung, ein Dichtstoff, Injektionsharz usw. im Hinblick auf die geforderten Eigenschaften zu verbessern, kommen aromatische Kohlenwasserstoffharze als Modifizierungsmittel zum Einsatz. Aufgrund ihrer Eigenschaften dienen sie zur Produktoptimierung in Polyurethansystemen.

Zum Füllen und Ausbessern von Parkettbohlen wird bisher ein Klebstoff auf Polyamidbasis verwendet. Ein solcher Klebstoff ist jedoch stark abrasiv. Werkzeuge, die zum Nachbearbeiten verwendet werden, zeigen dadurch relativ schnell Verschleisserscheinungen. Besonders Schleifbänder verschleissen schneller, wenn man Parkettbohlen, die mit Polyamidklebstoff ausgebessert wurden, abschleift.

Es gibt verschiedene Schmelzkleber, die jedoch den Nachteil haben, dass sie relativ schlecht gebohrt, gefräst, gesägt, geschnitten oder gehobelt werden können.

Eine thermoplastische Füllmasse zum Füllen von Rissen, Astspalten und flächigen Fehlstellen und Ausnehmungen in Holzoberflächen ist in der Europäischen Patentanmeldung mit Titel "Verfahren zum Ausgleichen der Oberfläche von Holz" erwähnt, die unter der Nummer EP 1378332 A2 publiziert wurde. Das Hauptaugenmerk richtet sich in dieser Patentanmeldung jedoch auf das Eindringen des Füllstoffes in kapillarähnliche Spalten. Als geeignete Füllmassen werden Vinylacetat, Ethyl-Vinyl-Acetat, amorphe Polyolefine, Polyurethane und Polyamide erwähnt, ohne das näher auf die Füllmasse eingegangen wird. Bei den angegebenen Massen handelt es sich um Standardfüllmassen, die auch in zahlreichen anderen industriellen Prozessen zum Einsatz kommen.

Es stellt sich die Aufgabe eine Füllstoffmischung bereit zu stellen, die beim Verwenden einfach aufzutragen ist, dauerhaft gute mechanische Eigenschaften wie Haftung, Festigkeit, Elastizität, Wärmestandfestigkeit aufweist und zugleich nach dem Auftragen und Trocknen verschleissarm bearbeitet bzw. nachbearbeitet werden kann.

Die Aufgabe wird gelöst durch die Verwendung einer thermoplastische Füllstoffmischung gemäss Anspruch 1.

Weitere vorteilhafte Ausbildungen sind den abhängigen Ansprüchen zu entnehmen.

### Detaillierte Beschreibung:

Basis des erfindungsgemässen Füllstoffs ist eine Basismischung aus einem Polymeranteil, einem Wachsanteil und einem Harzanteil.

Der Erfindung liegt die Erkenntnis zu Grunde, dass eine Mischung des Polymeranteils mit einem Wachsanteil und einem Harzanteil (hier als Basismischung bezeichnet), entgegen der Erwartung eines Fachmanns, die herausragenden Eigenschaften des Polymeranteils im allgemeinen nicht stört, sondern diese in vorteilhafter Weise ergänzt.

Der Polymeranteil umfasst gemäss Erfindung Copolymere. Copolymere sind Polymere, die sich aus unterschiedlichen Monomeren zusammensetzen welche regelmässig statistisch oder stochastisch in das Polymermolekül eingebaut sind.

Bei dem Polymeranteil, der unter anderem als Bindemittel in der erfindungsgemässen Füllstoffmischung dient, kann es sich um Polykondensate, z.B. Polyester oder Polyaddukte, z. B. Polyurethane oder vorzugsweise um Polymere, welche durch radikalische oder ionische Polymerisation von ethylenisch ungesättigten Monomeren erhältlich sind (kurz: Polymere), handeln.

Die Basismischung umfasst einen Polymeranteil aus der Gruppe Vinylacetat-Copolymer (VAc-Copolymer), Ethen-Ethylacrylat-Copolymer (E/EA), Ethen-Vinylacetat-Copolymer (E/VA), Ethylmethacrylat (EMA), Ethylen Butyl Acrylat Copolymer (EBA), Ethylen Acryl Säure Copolymer (EAA).

Eine Verwendung von E/VA als Copolymer führt dazu, dass die Spannungsrissbeständigkeit der Füllstoffmischung verbessert wird.

Der Polymeranteil hat unter anderem Einfluss auf die Sprödigkeit des Füllstoffes. Die Basismischung wird um so spröder je geringer der Polymeranteil wird. Dadurch wird die Basismischung besser schleifbar. Wird der Polymeranteil dagegen erhöht, so wird die Basismischung flexibler (weniger spröde), aber sie kann weniger gut geschliffen werden.

Als Wachsanteil kommen eine oder mehrere der folgenden Wachse zum Einsatz: Polyolefin-Wachs (Polyethylene-Wachs oder Polypropylene-Wachs), Amid-Wachs, Montan-Wachs, Kohlenwasserstoff-Wachs, E/VA-Wachs und Mischungen oder Modifikate dieser Wachse. Die wichtigsten Produkteigenschaften des Wachsanteils, wie Härte, Schmelzpunkt und Viskosität, können je nach Wunsch in weiten Grenzen gezielt eingestellt und in vielfältiger Weise kombiniert werden. Der Wachsanteil kann als Granulat, Pulver oder in Flockenform vorliegen. Es können auch flüssige Wachse zum Einsatz kommen. Es eignen sich sowohl homopolymere wie auch copolymere Wachse, wobei die homopolymeren Wachse bessere Ergebnisse liefern.

Der Wachsanteil hat unter anderem einen Einfluss auf die Viskosität und den Schmelzpunkt der Füllstoffmischung.

Besonders geeignet sind Wachse, die mit Hilfe von sogenannten Metallocen-Katalysatoren hergestellt werden.

Als Harzanteil können Naturharze und modifizierte Naturharze zum Einsatz kommen. Besonders geeignet sind nicht-modifizierte Kohlenwasserstoffharze oder aromatische Kohlenwasserstoffharze (z.B. Harzester).

Je nach Art des Harzanteils kann die Farbe der Füllstoffmischung beeinflusst werden. Weiterhin beeinflusst der Harzanteil weitere Merkmale wie Thermo- und UV-Stabilität, Abdampfverlust oder Verträglichkeiten mit den anderen Bestandteilen der FüllstofFmischung.

Die Kohlenwasserstoffharze können in flüssiger oder fester Form vorliegen.

Der Kohlenwasserstoffharz-Anteil der Füllstoffmischung dient unter anderem dazu, die Haftung zu verbessern und die Füllstoffmischung zu flexibilisieren. Ausserdem kann der Kohlenwasserstoffharz-Anteil die physikalische Trocknung beschleunigen und die Härte der Füllstoffmischung erhöhen. Ein weiterer Vorteil der Verwendung eines Kohlenwasserstoffharz-Anteils liegt in der effektiven Erhöhung der Klebrigkeit der Füllstoffmischung.

Ein Nachteil des Kohlenwasserstoffharz-Anteils ist darin zu sehen, dass er die Hydrophobie der Füllstoffmischung erhöht. Das kann dazu führen, dass die Füllstoffmischung nicht oder nur bedingt mit einer Farbe überstreichbar ist. Andererseits führt der Zusatz des Kohlenwasserstoffharz-Anteils als hydrophobem Modifizierungsmitteln dazu, dass die Füllstoffmischung feuchtigkeitsunempfindlicher wird. Ausserdem wird die Beständigkeit der ausgehärteten Füllstoffmischung gegen wässrige Medien erhöht.

Besonders geeignet sind hydrierte aliphatische Kohlenwasserstoffharze.

Der Basismischung aus Kohlenwasserstoffharz, Wachs und Polymer wird mindestens ein funktioneller Zusatz hinzugefügt. Derartige Zusätze werden hierin als Modifizierungsmittel bezeichnet.

Modifizierungsmittel werden der Basismischung zugesetzt, um bestimmte Eigenschaftsmerkmale an die Füllaufgabe anzupassen, wie z.B.:
- Reduzierung der Wasser- und Feuchtigkeitsbeständigkeit
- Optimierung der Verlaufseigenschaften
- Verbesserung der Füllstoff- und Pigmentbenetzung
- Anpassung der Elastizität,
- Anpassung der Farbe,
- Reduzierung der Sprödigkeit
- Verbesserung der Thermo- und UV-Stabilität,
- Reduzierung des Schwundes,
- Reduzierung der Abrasivität, d.h. der stumpfmachenden Wirkung auf Bearbeitungs- und Verarbeitungswerkzeuge.

Die Füllstoffmischung kann weitere Modifizierungsmittel umfassen, wie z.B. Weichmacher, Verlaufmittel, Verdicker, oder Farbstoffe, um einige Bespiele zu nennen.

Die Basismischung bildet nach dem Aushärten eine relativ glatte Oberfläche. Für zahlreiche Anwendungen wird jedoch ein Füllstoff gefordert, der dem zu füllenden Trägermaterial von der Oberflächenstruktur her ähnlich ist. Vor allem wenn es darum geht natürliche Trägermaterialien (zum Beispiel Holz) zu füllen, deren Oberfläche strukturiert, gemasert oder porös ist, bedarf es mindestens eines Modifzierungsmittels.

Um diesen Zweck zu erfüllen sind Leichtfüllstoffe, die eine Granularität aufweisen und sich gut und homogen in der Basismischung verteilen lassen, als Modifizierungsmittel besonders geeignet. Besonders vorteilhaft sind Mikrokugeln und Mikrokapseln. Es können zum Beispiel Metall- oder Metalloxid-Mikrokugeln (Al₂O₃, ZrO₂, HfO₂, TiO₂, CeO₄, SiO₂ Mischoxide etc.) eingesetzt werden. Durch das Beimengen eines solchen granularen Modifizierungsmittels lassen sich Poren in der Füllstoffmischung definieren und es kann eine maßgeschneiderte spezifische Oberfläche der Füllstoffmischung erzielt werden. Es können auch Mikrokugeln oder Kapseln aus Metalllegierungen oder aus Polymeren hergestellt und als Modifizierungsmittel eingesetzt werden. Auch geeignet sind Oxidkeramik-Mikrokugeln oder Kapseln, harzgebundene Graphitkugeln, Metallotkugeln.

Durch das Beifügen der Leichtfüllstoffe wird die Dichte der Füllstoffmischung reduziert. Damit wird die Füllstoffmischung leichter und kann einfacher in grossen Mengen transportiert werden.

Der Basismischung können Farbstoffe (Farbpigmente) als Modifizierungsmittel zugemengt werden. Es können, je nach Art und Menge der Farbstoffe, verschiedene Farben von weiss bis schwarz eingestellt werden. Damit kann die Füllstoffmischung so ausgelegt werden, dass sie der Farbe des zu füllenden Trägermaterials entspricht.

Um eine bessere Festigkeit zu erreichen, können als Modifizierungsmittel Fasern hinzugefügt werden. Bei der Wahl der Fasern ist darauf zu achten, dass die Abrasivität der Füllstoffmischung die gewünschten Werte nicht übersteigt. Weiche Fasern, insbesondere Naturfasern, eignen sich daher besser als harte Fasern. Je nach Länge der Fasern kann die Vernetzung, respektive der innere Zusammenhalt der Füllstoffmischung verbessert werden.

Die Füllstoffmischung kann in einfacher Weise durch Mischen der Bestandteile hergestellt werden. Dabei ist es vorteilhaft, zunächst eine Basismischung aus dem Polymer, dem Wachs und dem Kohlenwasserstoffharz herzustellen und diese dann mit weiteren Modifizierungsmittel zu mischen.

Wichtig ist, dass die Modifizierungsmittel mit dem Wachsanteil kompatibel sind.

In den folgenden Tabellen sind Beispiele für die Zusammensetzung der erfindungsgemässen Füllstoffmischung gegeben.

| Material | Anteil in Gewichts-Prozent | Konkretes Beispiel in Gewichts-Prozent |
|---|---|---|
| hydriertes aliphatisches Kohlenwasserstoffharz | 15-40 % | 20 % |
| Polyolefin-Wachs | 15-40 % | 20 % |
| E/VA Copolymer | 15-40 % | 30 % |
| Metall-Hohlkugeln | 5-30 % | 25 % |
| Farbpigmente | 1-10 % | 5 % |

| Material | Anteil in Gewichts-Prozent | Konkretes Beispiel in Gewichts-Prozent |
|---|---|---|
| aromatisches Kohlenwasserstoffharz | 15-40 % | 28 % |
| Polyolefin-Wachs | 15-40 % | 28 % |
| E/EA Copolymer | 15-40 % | 28 % |
| Al₂O₃ Metalloxid-Mikrokugeln | 5-25 % | 10 % |
| Fasern | 0.1-5 % | 2 % |
| Farbpigmente | 1-10 % | 4 % |

Ein weiterer wichtiger Vorteil der Füllstoffmischung ist, dass sie schnell aushärtet und kaum Feuchtigkeit abgibt, die in das zu füllende Trägermaterial abwandern könnte.

Je nach Zusammensetzung ist die erfindungsgemässe Füllstoffmischung überstreichbar oder spritzlackierbar.

Die Füllstoffmischung eignet sich besonders für die maschinelle Verarbeitung von Rissen, Löchern und dergleichen in einem Trägermaterial.

Die Füllstoffmischung gemäss Erfindung ist heissschmelzend. Sie wird verarbeitet, in dem sie aufgeschmolzen wird. Die Füllstoffmischung kann mittels Kartuschen und Pressen, oder mittels Hotmelt-Geräten verarbeitet werden.

Die Füllstoffmischung hat den Vorteil, dass sie mehrfach aufgeschmolzen werden kann, ohne dass ihre charakteristischen Eigenschaften merklich verändert würden.

Vorzugsweise wird die Füllstoffmischung so ausgelegt, dass sie in einem Temperaturbereich zwischen 120 Grad und 180 Grad verarbeitet werden kann. Besonders bevorzugt sind Füllstoffe, die zwischen 130 Grad und 150 Grad verarbeitet, werden können. Je nach Temperatur kann die Viskosität der thermoplastischen Füllstoffmischung beeinflusst werden.

Insbesondere eignet sie sich die Füllstoffmischung zum Füllen und Ausbessern von hölzernen Gegenständen, insbesondere von Brettern, Furnieren, Bohlen und dergleichen.

Vorzugsweise wird die Füllstoffmischung hergestellt, in dem ein Polymeranteil, ein Wachsanteil und ein Harzanteil aufgeschmolzen wird. Anschliessend werden die Zusätze gleichzeitig oder nacheinander mittels Disolver (Rührwerk) hinzugefügt.

Die erfindungsgemässe Füllstoffmischung kann auch in einem Extruder hergestellt werden. Die Füllstoffmischung kann in einer Extrusionsanlage kontinuierlich zu endlos geformten Halbzeugen in Form von Rundstäben oder Flachstäben extrudiert und dann in kürzere Stäbe zertrennt werden.

Die Füllstoffmischung kann auch als Granulat oder in Flockenform gefertigt werden.

Eine Füllstoffmischung gemäss Erfindung zeichnet sich besonders dadurch aus, dass sie nur gering abrasiv ist. Dass heisst, dass ein Trägermaterial, das mit der Füllstoffmischung gefüllt wurde ohne Probleme mit Fräs-, Bohr- und Schleifwerkzeugen nachbearbeitet werden kann. Durch die geringe Abrasivität der Füllstoffmischung, wird eine längere Standzeit der Fräs-, Bohr- und Schleifwerkzeuge gewährleistet.

Eine Füllstoffmischung gemäss Erfindung zeichnet sich auch dadurch aus, dass sie nicht aushärtet so lange die Temperatur in einem vorgegebenen Bereich gehalten wird und das sie dadurch besser maschinell verarbeitet werden kann, ohne die Pumpen, Schläuche, Ventile und dergleichen zuzusetzen.

Die erfindungsgemässe Füllstoffmischung ist besonders zum Ausbessern von Holzelementen, die einen Wuchs-, Handlings- oder Bearbeitungsschaden aufweisen, geeignet.

## Patentansprüche

1. Verwendung einer thermoplastischen Füllstoffmischung zum Füllen oder Ausbessern von Holzelementen, wobei die thermoplastische Füllstoffmischung eine Basismischung umfasst aus
- einem Polymeranteil aus der Gruppe Vinylacetat-Copolymer (VAc-Copolymer), Ethen-Ethylacrylat-Copolymer (E/EA), Ethen-Vinylacetat-Copolymer (E/VA), Ethylmethacrylat Copolymer (EMA), Ethylen Butyl Acrylat Copolymer (EBA), Ethylen Acryl Säure Copolymer (EAA),
- einem Wachsanteil aus der Gruppe Polyolefin-Wachs, Amid-Wachs, Montan-Wachs, Ethen-Vinylacetat-Copolymer-Wachs (E/VA-Wachs),
- einem Kohlenwasserstoffharz als Harzanteil,
und wobei diese Basismischung zusätzlich mindestens ein Modifizierungsmittel umfasst, das ausgewählt ist aus der Gruppe:
- granulare Leichtfüllstoffe,
- Fasern,
- Farbstoffe.

2. Verwendung nach Anspruch 1, **dadurch gekennzeichnet, dass** der Polymeranteil Ethen-Vinylacetat-Copolymer (E/VA) umfasst.

3. Verwendung nach Anspruch 1 oder 2, **dadurch gekennzeichnet, dass** der Polymeranteil zwischen 15 - 40 Gewichts-Prozent liegt.

4. Verwendung nach Anspruch 1 bis 3, **dadurch gekennzeichnet, dass** der Wachsanteil Mischungen der genannten Wachse umfasst.

5. Verwendung nach Anspruch 4, **dadurch gekennzeichnet, dass** der Wachsanteil zwischen 15 - 40 Gewichts-Prozent liegt.

6. Verwendung nach Anspruch 1 bis 5, **dadurch gekennzeichnet, dass** der Harzanteil ein Naturharz oder modifiziertes Naturharz, vorzugsweise hydriertes aliphatisches Kohlenwasserstoffharz und/oder aromatisches Kohlenwasserstoffharz umfasst.

7. Verwendung nach Anspruch 6, **dadurch gekennzeichnet, dass** der Harzanteil zwischen 15 - 40 % Gewichts-Prozent liegt.

8. Verwendung nach Anspruch 1, **dadurch gekennzeichnet, dass** er als granulare Leichtfüllstoffe Metall-Mikrokugeln oder Metalloxid-Mikrokugeln in einem prozentualen Anteil zwischen 5 - 30 Gewichts-Prozent, vorzugsweise zwischen 5 - 25 Gewichts-Prozent umfasst.

## Claims

1. Use of a thermoplastic filler mixture for filling or mending wood elements, wherein the thermoplastic filler mixture comprises a base mixture made of
- a polymer fraction from the group vinyl acetate copolymer (VAc copolymer), ethene ethyl acrylate copolymer (E/EA), ethene vinyl acetate copolymer (E/VA), ethyl methacrylate copolymer (EMA), ethylene butyl acrylate copolymer (EBA), ethylene acrylic acid copolymer (EAA),
- a wax fraction from the group polyolefin wax, amide wax, montane wax, ethyl vinyl acetate copolymer wax (E/VA wax),
- a hydrocarbon resin as a resin fraction,
and this base mixture additionally comprises at least one modification agent, which is selected from the following group:
- granular light fillers,
- fibers,
- colorants.

2. The use according to claim 1, **characterized in that** the polymer fraction comprises ethene vinyl acetate copolymer (E/VA).

3. The use according to claim 1 or 2, **characterized in that** the polymer fraction is between 15-40 wt-%.

4. The use according to claims 1 to 3, **characterized in that** the wax fraction comprises mixtures of the mentioned waxes.

5. The use according to claim 4, **characterized in that** the wax fraction is between 15-40 wt-%.

6. The use according to claims 1 to 5, **characterized in that** the resin fraction comprises a natural resin or a modified natural resin, preferably hydrolyzed aliphatic hydrocarbon resin and/or aromatic hydrocarbon resin.

7. The use according to claim 6, **characterized in that** the resin fraction is between 15-40 wt-%.

8. The use according to claim 1, **characterized in that**, as the granular light fillers, it comprises metal microbeads or metal oxide microbeads in a percent fraction between 5-30 wt-%, preferably between 5-25 wt-%.

## Revendications

1. Utilisation d'un mélange de charges thermoplastiques pour combler ou réparer des éléments en bois, le mélange de charges thermoplastiques comprenant un mélange de base composé
- d'une part de polymère issue du groupe copolymère vinylacétate (copolymère Vac), copolymère éthylène-éthylacrylate (E/EA), copolymère éthylène-vinylacétate (E/VA), copolymère éthylméthacrylate (EMA), copolymère éthylène-butylacrylate (EBA), copolymère éthylène-acide acrylique (EAA),
- d'une part de cire issue du groupe des cires de polyoléfine, des cires d'amide, des cires de lignite, des cires de copolymère éthylène-vinylacétate (cires E/VA),
- d'une résine d'hydrocarbure comme part de résine,
ce mélange de base comprenant en outre au moins un agent de modification, choisi dans le groupe composé de :
- matières granulaires de remplissage,
- fibres,
- colorants.

2. Utilisation selon la revendication 1, **caractérisée en ce que** la part de polymère comprend un copolymère éthylène-vinylacétate (E/VA).

3. Utilisation selon la revendication 1 ou 2, **caractérisée en ce que** la part de polymère est comprise entre 15 et 40 pour cent en poids.

4. Utilisation selon les revendications 1 à 3, **caractérisée en ce que** la part de cire comprend des mélanges des cires mentionnées.

5. Utilisation selon la revendication 4, **caractérisée en ce que** la part de cire est comprise entre 15 et 40 pour cent en poids.

6. Utilisation selon les revendications 1 à 5, **caractérisée en ce que** la part de résine comprend une résine naturelle ou une résine modifiée, de préférence une résine d'hydrocarbure aliphatique hydrogénée et/ou une résine d'hydrocarbure aromatique.

7. Utilisation selon la revendication 6, **caractérisée en ce que** la part de résine est comprise entre 15 et 40 pour cent en poids.

8. Utilisation selon la revendication 1, **caractérisée en ce qu'**elle comprend comme matières granulaires de remplissage des microbilles de métal ou des microbilles d'oxyde de métal dans une part comprise entre 5 et 30 pour cent en poids, de préférence entre 5 et 25 pour cent en poids.
